# EUROPÄISCHE PATENTSCHRIFT

(11) **EP 3 771 324 B1**
(45) Veröffentlichungstag und Bekanntmachung des Hinweises auf die Patenterteilung: **31.05.2023**
(21) Anmeldenummer: 20170593.6
(22) Anmeldetag: 21.04.2020
(51) Int. Cl.: A01D 90/00

(54) **LADE- UND/ODER HÄCKSELWAGEN**
LOADING AND/OR SCHREDDING CARRIAGE
REMORQUE POUR CHARGEMENT DE FOURRAGE ET/OU DE HACHAGE

(30) Priorität: 29.07.2019 DE 202019104154 U
(43) Veröffentlichungstag der Anmeldung: 03.02.2021
(73) Patentinhaber: PÖTTINGER Landtechnik GmbH, 4710 Grieskirchen (AT)
(72) Erfinder: POINTNER, Walter, 4710 Grieskirchen (DE); REININGER, Markus, 4710 Grieskirchen (DE); PFEIFFER, Stefan, 4710 Grieskirchen (DE); HOFINGER, Markus, 4710 Grieskirchen (DE); WEIßENBÖCK, Thomas, 4710 Grieskirchen (DE)
(74) Vertreter: Thoma, Michael

(56) Entgegenhaltungen:
- EP-A1- 3 590 324
- EP-A2- 0 477 716
- EP-A2- 3 320 767
- EP-B1- 2 545 763
- AT-U1- 13 920
- DE-A1-102006 039 672
- DE-A1-102007 062 025
- DE-A1-102015 103 688
- DE-A1-102015 104 390
- DE-B4-102006 039 672
- DE-U1- 20 014 129

## Beschreibung

Die vorliegende Erfindung betrifft einen Lade- und/oder Häckselwagen, mit einem Laderaum zum Speichern von Erntegut, der einen Kratzboden und eine verstellbare Frontwand aufweist, sowie einer Steuervorrichtung zum Betätigen des Kratzbodens und der Frontwand.

Bei Ladewagen zum Einbringen von Heu, Gras und Stroh wird der Laderaum rechts und links üblicherweise von unbeweglichen Laderaumwänden begrenzt, während die hintere Laderaumwand üblicherweise in Form einer Heckklappe ausgebildet ist, um den Laderaum zum Abladen öffnen zu können. Die Frontwand ist an sich lange Zeit ebenfalls starr gewesen, wird in jüngerer Zeit jedoch oftmals verstellbar ausgebildet, um den Laderaum variabel nutzen zu können.

Die Schrift AT 139 20 U1 beschreibt einen Ladewagen, dessen Laderaum eine verschwenkbare Frontwand sowie einen Kratzboden besitzt. Drückt das eingeladene Erntegut mit einem vorbestimmten Druck gegen die Frontwand, was sensorisch erfasst wird, wird einerseits der Kratzboden betätigt und gegebenenfalls zusätzlich die Frontwand ein Stück weit nach vorne verschwenkt, um auf diesem Wege einerseits das Erntegut von der Frontwand weg nach hinten zu fördern und andererseits das Volumen des Laderaums ein Stück weit zu vergrößern.

Die EP 04 77 716 A2 zeigt einen Ladewagen, dessen Kratzbodenantrieb in Abhängigkeit von Signalen von Druckaufnehmern an der Speicherraum-Vorderwand gesteuert wird. Übersteigt der Druck an der Vorderwand ein vorbestimmtes Maß, sodass ein Druckschaltglied einen Schalter betätigt, wird der Kratzbodenantrieb eingeschaltet und nach Unterschreiten des vorbestimmten Drucks wieder abgeschaltet.

Ferner zeigt die Schrift DE 10 2015 103 688 A1 einen Ladewagen, der zusätzlich zum Kratzboden eine Entladehilfseinrichtung benachbart zum Ladeaggregat aufweist, um während des Entladevorgangs den Futterstock zyklisch innerhalb des Speicherraums hin- und herzubewegen. Die Schrift DE 10 2015 104 390 A1 zeigt einen ähnlichen Ladewagen.

Die EP 33 20 767 zeigt einen Ladewagen mit verkippbarer Vorderwand, die zweiteilig ausgebildet ist und einen verschwenkbaren Unterteil und einen dazu nochmals verschwenkbaren Oberteil umfasst.

Ferner zeigt die Schrift DE 10 2007 062 025 A1 einen Ladewagen, dessen Frontwand ein Stück weit nach hinten verschwenkt und dessen Kratzbodenantrieb betätigt wird, wenn am oberen Ende der Frontwand ein vorbestimmter Futterstockdruck erzeugt wird, wobei die Frontwand zurück nach vorne verschwenkt und der Kratzboden abgestellt wird, wenn der Futterdruck nachlässt. Für den Häckselbetrieb kann ein oberer Teil der Frontwand nach vorne verschwenkt werden, um das Einblasen von Häckselgut zu ermöglichen.

Auch die Schrift DE 200 14 129 U1 zeigt einen Ladewagen mit einer verschwenkbaren Frontwand, die bei Betätigung des Kratzbodens ein Stück weit nach hinten verschwenkt wird.

Die Schrift EP 25 45 763 B1 lehrt es ebenfalls, die Frontwand eines Ladewagens nach vorne zu verschwenken, um das Laderaumvolumen zu erhöhen. Dabei soll die Frontwand um bis zu 80° nach vorne verschwenkt werden, um eine signifikante Vergrößerung des Ladevolumens zu erzielen. Um das dort gespeicherte Erntegut wieder entladen zu können, wird die Frontwand beim Entladen des Ladewagens wieder zurück nach hinten geschwenkt, um das Erntegut aus dem vergrößerten Laderaumbereich wieder in den Eingriffsbereich des Kratzbodens zu bringen.

Die Schrift DE 10 2006 039 672 B4 zeigt ferner einen Ladewagen, der eine mehrteilig ausgebildete Frontwand besitzt und durch Umklappen zweier oberer Frontwand-Klappteile für den Betrieb als Häckselwagen umkonfiguriert werden kann, sodass gehäckseltes Erntegut von oben her in den Laderaum gefüllt werden kann und für das Förderorgan des Parallelfahrzeugs Platz geschaffen wird.

Bei den genannten Ladewagen, deren Laderaumvolumen durch Nach-Vorne-Schwenken der Frontwand vergrößert werden kann, wird zwar eine vergrößerte Auslastung ermöglicht. Allerdings kommt es zu einer ungleichmäßigen Verdichtung des Ernteguts in verschiedenen Abschnitten des Laderaums. Zum einen ist das Erntegut zur Heckklappe oft zunehmend weniger verdichtet, wobei sich gleichzeitig zur Heckklappe hin oft eine geringere Ernteguthöhe einstellt. Zum anderen wird das Erntegut auch ganz vorne an der Heckklappe kaum noch verdichtet, wenn diese sehr stark nach vorne verschwenkt wird, wie dies bei der Schrift EP 25 45 763 B1 vorgeschlagen wird.

Der vorliegenden Erfindung liegt daher die Aufgabe zugrunde, einen verbesserten Lade- und/oder Häckselwagen zu schaffen, der Nachteile des Standes der Technik vermeidet und letzteren in vorteilhafter Weise weiterbildet. Insbesondere soll ein intelligenteres Beladen des Laderaums erreicht werden, bei dem die maximale Ladehöhe auch zur Heckklappe hin erreicht und eine gleichmäßige Verdichtung des Ernteguts im gesamten Laderaum erzielt wird.

Erfindungsgemäß wird die genannte Aufgabe durch einen Lade- und/oder Häckselwagen gemäß Anspruch 1 gelöst. Bevorzugte Ausgestaltungen der Erfindung sind Gegenstand der abhängigen Ansprüche.

Es wird also vorgeschlagen, die Verstellbarkeit der Frontwand auch beim Beladen des Wagens zu nutzen, um eine gleichmäßige Verdichtung und einen gleichmäßig hohen Aufbau des Futterstocks zu erzielen. Durch eine koordinierte Betätigung von Kratzboden und Frontwand kann die beim Betätigen des Kratzbodens sonst auftretende Auflockerung des Ernteguts und die damit einhergehende Absenkung der Futterstockhöhe vermieden werden. Erfindungsgemäß besitzt die Steuervorrichtung einen Belade-Betriebsmodus, in dem beim Beladen des Laderaums mit Erntegut die Frontwand bei Betätigung des Kratzbodens automatisch ein Stück nach hinten zum Heck hin verstellt und anschließend wieder zurück nach vorne in eine Ladestellung verstellt wird. Wird der Kratzboden manuell oder automatisch betätigt, um den sich an der Frontwand aufbauenden Erntegutstock ein Stück weit nach hinten zur Heckklappe hin zu befördern und den Erntegutdruck am Frontwandabschnitt des Laderaums zu ermäßigen, wird gleichzeitig oder zeit- bzw. wegversetzt auch die Frontwand ein Stück weit nach hinten verfahren bzw. verschwenkt, sodass die Verdichtung des Ernteguts aufrechterhalten und der aufgebaute Erntegutstock in voller Höhe ein Stück nach hinten verbracht wird. Um für den weiteren Beladevorgang wieder Platz im Bereich der Frontwand zu schaffen, wird diese anschließend wieder zurück in eine Ladestellung nach vorne verschwenkt bzw. verfahren.

Diese mit dem Kratzboden koordinierte Betätigung der Frontwand nach hinten auf die Heckklappe zu und wieder zurück nach vorne in die Ladestellung kann während des Beladevorgangs zyklisch mehrfach wiederholt werden, bis der im vorderen Bereich des Laderaums aufgebaute Erntegutstock bis ganz zurück an die Heckklappe verfahren ist und der gesamte Laderaum befüllt ist.

Der genannte zweite Teil der Stellbewegung der Frontwand, nämlich zurück nach vorne in die Ladestellung kann zu verschiedenen Zeitpunkten veranlasst werden, beispielsweise unmittelbar nach Erreichen der zurückgefahrenen Frontklappenstellung, sodass diese ohne Stillstand zunächst zurück und sodann gleich wieder nach vorne fährt. Vorteilhafterweise kann aber das Zurückfahren der Frontwand nach vorne in die Ladestellung ebenfalls koordiniert mit der Stellbewegung des Kratzbodens ausgeführt werden, insbesondere nach dem Stoppen des Kratzbodens veranlasst werden, sodass die Frontwand erst dann wieder zurück nach vorne fährt, wenn der Kratzboden angehalten hat.

Die Verstellung der Frontwand kann gegenüber der Betätigung des Kratzbodens zeitversetzt und/oder wegversetzt veranlasst werden. Die Steuervorrichtung kann ab dem Einschalten des Kratzbodens eine bestimmte Zeitspanne verstreichen lassen oder eine bestimmte Wegstrecke des Kratzbodens abwarten, bis die Steuervorrichtung die Frontwand beim Beladen nach hinten fährt. Alternativ oder zusätzlich kann ein solcher Zeitversatz oder Wegversatz auch für die Rückstellbewegung der Frontwand nach vorne in die Ladestellung vorgesehen werden, sodass die Steuereinrichtung eine gewisse Zeitspanne nach dem Stoppen des Kratzbodens abwartet oder ab dem Starten des Kratzbodens eine vorbestimmte Wegstrecke des Kratzbodens abwartet, bis die Frontwand aus der zurückgeschwenkten Stellung wieder zurück nach vorne in die Ladestellung verbracht wird. Ein solcher Zeitversatz kann sich günstig auf die gewünschte Verdichtung des Ernteguts auswirken.

Eine gleichmäßige Verdichtung und ein gleichmäßig hoher Aufbau des Futterstocks kann auch durch eine verstellbare Verdichtungsklappe und deren geschickte Betätigung unterstützt werden. Nach einem weiteren Aspekt der vorliegenden Erfindung kann eine solche Verdichtungsklappe an einem oberen Frontwandabschnitt um eine liegende Achse schwenkbar gelagert und/oder in einer Schiebeführung höhenverstellbar gelagert sein, um je nach Höhenstellung der Verdichtungsklappe den von oben her auf den Futterstock wirkenden Verdichtungsdruck der Verdichtungsklappe erhöhen bzw. erniedrigen zu können. Die genannte Steuervorrichtung kann dabei das Verschwenken der Verdichtungsklappe nach oben und unten bzw. das lineare Verstellen der Verdichtungsklappe nach oben und unten in geschickter Weise mit der Verstellung des Kratzbodens und/oder mit der Verstellung eines unteren und/oder oberen Frontwandabschnitts koordinieren bzw. abstimmen. Die genannte Steuervorrichtung kann hierzu einen Verdichtungsklappen-Betriebsmodus aufweisen, in dem die Verdichtungsklappe in Abhängigkeit einer Kratzbodenbetätigung und/oder einer Verstellung des unteren und/oder oberen Frontwandabschnitts gesteuert wird.

Insbesondere kann es hilfreich sein, wenn die Steuervorrichtung die Verdichtungsklappe ein Stück weit nach oben öffnet, wenn der sich an der Frontwand aufgebaute Futterstock beim Beladen des Wagens ein Stück weit nach hinten transportiert wird, sei es durch eine nach hinten zum Heck hingehende Verstellung der Frontwand und/oder durch ein Betätigen des Kratzbodens. Wird die Verdichtungsklappe vor und/oder bei Betätigung des Kratzbodens und/oder vor und/oder bei einem nach hinten Verstellen der Frontwand ein Stück weit geöffnet, erleichtert dies den Transport des aufgebauten Futterstocks zum Heck hin.

Ist die Verdichtungsklappe in der genannten Weise ein Stück weit geöffnet worden, um den nach hinten Transport des Futterstocks zu erleichtern, kann die Verdichtungsklappe wieder zurück nach unten geschlossen werden, wenn der Kratzboden abgestellt wird und/oder der untere und/oder obere Frontwandabschnitt wieder zurück nach vorne verstellt wird. Die Schließbewegung der Verdichtungsklappe kann dabei vor, während und/oder nach Beendigung der Kratzbodenbetätigung und/oder vor, während und/oder nach dem zurück nach vorne Verstellen der Frontwand erfolgen.

In vorteilhafter Weiterbildung der Erfindung kann die genannte Verdichtungsklappe vor dem rückwärts gerichteten Transportieren des Futterstocks, sei es durch nach hinten Verstellen der Frontwand und/oder durch Betätigen des Kratzbodens, ein Stück weit nach unten weiter geschlossen werden, um den zu transportierenden Futterstock nochmals zu verdichten, bevor dann in der genannten Weise die Verdichtungsklappe ein Stück weit nach oben geöffnet wird, um das Abtransportieren tatsächlich zu erleichtern.

Die Betätigung der Verdichtungsklappe beim Beladen des Laderaums, um einen möglichst gleichmäßigen Futterstockaufbau und eine gleichmäßige Verdichtung zu erzielen, kann ggf. auch ohne Verstellung der Frontwand, beispielsweise nur in Abhängigkeit des Kratzbodenantriebs erfolgen, und insofern auch ohne Vorhandensein einer verstellbar ausgebildeten Frontwand eine vorteilhafte Ausbildung des Lade- und /oder Häckselwagens darstellen.

Der genannte Bewegungszyklus von Kratzboden und Frontwand beim Beladen des Laderaums kann grundsätzlich manuell ausgelöst werden. Beispielsweise kann der Schlepperführer bei Erkennen zu starker Verpressung an der Frontwand oder zu hohem Auftürmen an der Frontwand den Kratzbodenantrieb betätigen, woraufhin die Steuereinrichtung dann gegebenenfalls zeit- und/oder wegversetzt die Frontwand in der genannten Weise ein Stück weit nach hinten verstellt und bei Stoppen des Kratzbodenantriebs wieder zurück nach vorne in die Ladestellung verstellt. Gegebenenfalls kann diese Betätigung auch halbautomatisch erfolgen dahingehend, dass dem Schlepperführer bei sensorischer Erfassung des Erntegutdrucks und/oder des Füllstands im Laderaum ein Signal angezeigt oder in anderer Weise, beispielsweise akustisch ausgegeben wird, woraufhin der Schlepperführer dann den Kratzbodenantrieb betätigt.

In Weiterbildung der Erfindung kann die zyklische Betätigung von Kratzboden und Frontwand beim Beladen des Laderaums aber auch vollautomatisch ausgeführt werden. Insbesondere kann die Steuervorrichtung dazu ausgebildet sein, im Belademodus das Betätigen des Kratzbodens und das damit verbundene Verstellen der Frontwand nach hinten und zurück nach vorne automatisch in Abhängigkeit eines Sensorsignals einer Erfassungseinrichtung zu veranlassen, welches einen Erntegutdruck und/oder eine Ernteguthöhe im Laderaum, insbesondere im Bereich an dessen Frontwand, und/oder einen Förderwiderstand beim Beladen des Laderaums mit Erntegut charakterisiert.

Beispielsweise kann die Leistungsaufnahme eines Förderrotors erfasst werden, mittels dessen das Erntegut in den Laderaum befördert wird. Je größer der Förderwiderstand durch einen sich immer größer aufbauenden Staudruck im Laderaum erhöht, desto schwerer muss der Förderrotor arbeiten und desto höher wird dessen Leistungsaufnahme steigen. Ist der Förderrotor elektrisch angetrieben, kann beispielsweise ein Sensor die Stromaufnahme messen. Bei einem mechanischen Antriebstrang kann beispielsweise eine Ketten- oder Riemenspannung gemessen oder eine Lagerreaktionskraft des Rotors bestimmt werden. Übersteigt das entsprechende Sensorsignal ein vorbestimmtes Niveau oder wird ein vorbestimmtes Sensorsignal abgegeben, kann die Steuereinrichtung den erläuterten Bewegungszyklus von Kratzboden und Frontwand in Gang setzen, wobei das Stoppen des Kratzbodens und das damit einhergehende Zurückfahren der Frontwand nach vorne dann vorgenommen werden kann, wenn das entsprechende Sensorsignal wieder abfällt bzw. erlischt. Alternativ kann auch ein fester Bewegungszyklus im Sinne einer vorbestimmten Kratzbodenstrecke und einer damit einhergehenden Frontwandbetätigung von der Steuereinrichtung vorgesehen werden.

Insbesondere kann aber auch eine vom eingeladenen Erntegut bewirkte Bewegung und/oder Belastung der Frontwand von der Erfassungseinrichtung erfasst werden, um in Abhängigkeit eines Sensorsignals, das eine entsprechende Bewegung und/oder Belastung der Frontwand angibt, die aufeinander abgestimmte Bewegung von Kratzboden und Frontwand vorzunehmen.

Vorteilhafterweise kann an einem oberen Frontwandabschnitt eine Verdichterklappe vorgesehen sein, die um eine liegende Querachse, das heißt quer zur Längsmittelebene des Lade- und/oder Häckselwagens ausgerichtete Schwenkachse klappbar ist, wobei sich diese Verdichterklappe im Beladebetrieb horizontal oder geneigt nach hinten in den Laderaum erstrecken kann. Baut sich der Erntegutstock an der Frontwand nach oben weit genug auf, wird die Verdichterklappe nach oben bewegt bzw. versucht das Erntegut die Verdichterklappe nach oben zu drücken. Die Erfassungseinrichtung kann eine solche Verdichterklappenbewegung und/oder - belastung erfassen und ein Signal abgeben, wenn die Verdichterklappe eine vorbestimmte Verstellung und/oder Belastung erfahren hat. Die Steuereinrichtung kann dann in Abhängigkeit dieses Signals den genannten koordinierten Bewegungszyklus von Kratzboden und Frontwand veranlassen, wobei der Kratzboden wieder gestoppt werden kann, wenn das genannte Signal nicht mehr gegeben ist oder wenn ein vorbestimmter Kratzbodenweg zurückgelegt ist oder eine vorbestimmte Betätigungszeit verstrichen ist.

Alternativ oder zusätzlich zu einer solchen Verdichterklappe kann als Maß für den Erntegutdruck und/oder die Erntedruckhöhe, der bzw. die eine Betätigung des Kratzbodens angezeigt erscheinen lässt, auch eine Belastung und/oder Verstellung der gesamten Frontwand oder eines unteren Frontwandteils sensorisch erfasst werden, welcher vom Erntegut beim Beladen veranlasst wird. Drückt das Erntegut ausreichend stark gegen die Frontwand, kann beispielsweise ein Kraftmesser die Belastung der Frontwand messen. Ist die Frontwand durch einen Druckmittelzylinder verstellbar, kann beispielsweise der Druck im Druckmittelzylinder gemessen und als Maß für die Frontwandbelastung und damit als Maß für den Erntegutdruck verwendet werden. In Abhängigkeit des Signals des genannten Kraftmessers kann der genannte Bewegungszyklus von Kratzboden und Frontwand von der Steuereinrichtung in Gang gesetzt werden, wobei auch hier der Kratzboden gestoppt und damit einhergehend die Frontwand wieder nach vorne zurückverstellt werden kann, wenn das Signal des Kraftmessers ausbleibt bzw. unter ein bestimmtes Niveau fällt. Alternativ kann der Verstellzyklus aber auch beendet bzw. zu Ende gebracht werden, wenn der Kratzboden einen vorbestimmten Weg zurückgelegt hat oder eine vorbestimmte Zeitspanne verstrichen ist.

Vorteilhafterweise kann der Stellweg, den die Frontwand beim Betätigen des Kratzbodens während des Ladevorgangs nach hinten verstellt wird, variabel eingestellt werden. Die Steuereinrichtung kann eine entsprechende Einstellvorrichtung zum Einstellen des Stellwegs und/oder -winkels, um den die Frontwand nach hinten verstellt wird, aufweisen.

Die genannte Einstellvorrichtung kann hierbei grundsätzlich verschieden ausgebildet sein, wobei insbesondere eine halbautomatische oder vollautomatische Berücksichtigung zumindest eines Erntegutparameters vorgesehen sein kann.

In vorteilhafter Weiterbildung der Erfindung kann die genannte Einstellvorrichtung Auswahlmittel zum Auswählen zumindest eines Erntegutparameters wie Ernteguttyp, Schnittlänge und/oder Erntegutdichte aufweisen und den Stellweg bzw. -winkel der Frontwand nach hinten in Abhängigkeit des ausgewählten Erntegutparameters festlegen. Beispielsweise kann dem Maschinenführer ein Auswahlmenü angezeigt werden, mittels dessen relevante Erntegutparameter abgefragt bzw. zur Auswahl angeboten werden, beispielsweise dergestalt "Erntegut feucht" und "Erntegut trocken" oder "Stroh", "Heu" und "Gras". Wählt der Maschinenführer eine oder mehrere der angebotenen Optionen, stellt die Einstellvorrichtung den Stellweg und/oder - winkel für die Frontwand in dem beschriebenen Belade-Steuermodus entsprechend ein.

Gegebenenfalls kann die genannte Einstellvorrichtung auch vollautomatisch arbeiten, wobei in diesem Fall einer oder mehrere der genannten Erntegutparameter sensorisch erfasst werden und die Einstellung in Abhängigkeit eines entsprechenden Sensorsignals vorgenommen werden kann.

Alternativ oder zusätzlich zur Berücksichtigung eines Erntegutparameters kann die Einstellvorrichtung aber auch einen Betriebsparameter des Lade- und/oder Häckselwagens für die Einstellung des Verstellwegs der Frontwand berücksichtigen, beispielsweise den Füllstand des Ladewagens oder eine Hangneigung, die über eine Erfassungseinrichtung erfasst und der Einstellvorrichtung bereitgestellt werden können. Je nachdem, ob die Hangneigung abschüssig oder ansteigend oder je nachdem wie stark die Hangneigung ist, und/oder je nachdem, wie voll der Laderaum bereits ist, kann die Frontwand bei Betätigung des Kratzbodens mehr oder weniger weit nach hinten verstellt werden, bevor sie zurück in die Ladestellung nach vorne verstellt wird.

In Weiterbildung der Erfindung kann auch die Ladestellung der Frontwand, in die die Frontwand nach erfolgtem Verstellen nach hinten wieder zurück nach vorne gefahren wird, variabel eingestellt werden, wobei die Ladestellung für den gesamten Beladevorgang eingestellt oder auch sukzessive während eines Beladevorgangs verändert werden kann. Beispielsweise kann vorgesehen sein, dass die Frontwand mit Fortschreiten des Beladevorgangs zunehmend weiter nach vorne verfahren wird, um zusätzlichen Laderaum zu schaffen. Dies kann beispielsweise in die genannte koordinierte Verstellung von Kratzboden und Frontwand integriert werden, beispielsweise dergestalt, dass nach jedem oder nach gegebenenfalls einigen Verstellzyklen, die jeweils ein Betätigen des Kratzbodens, ein Zurückverstellen der Frontwand und ein wieder nach vorne Verstellen der Frontwand umfassen, die Frontwand ein Stück weiter nach vorne in eine jeweils weiter vorne liegende Ladestellung verstellt wird. Wird beispielsweise der Beladevorgang mit einer näherungsweise senkrecht stehenden Frontwand begonnen, kann die Frontwand sukzessive mit Fortschreiten des Beladevorgangs nach vorne zum Schlepper hin in eine jeweils stärker geneigte Stellung verbracht werden.

Die Steuereinrichtung kann vorteilhafterweise hierfür Ladestellungseinstellmittel aufweisen, mittels derer die Ladestellung der Frontwand variabel eingestellt werden kann. Die genannten Ladestellungseinstellmittel können einen Automatikmodus umfassen, in dem die Ladestellung in der beschriebenen Weise automatisch mit jedem, jedem zweiten oder jedem x-ten Betätigungszyklus von Kratzboden und Frontwand ein Stück weit nach vorne in eine weiter nach vorne zum Schlepper hin liegende Ladestellung verstellt wird. Alternativ oder zusätzlich können die genannten Ladestellungseinstellmittel auch manuelle Betätigungsmittel umfassen, um den Maschinenführer eine manuelle Einstellung zu ermöglichen.

Alternativ oder zusätzlich kann eine Veränderung der Ladestellung der Frontwand auch erst dann vorgenommen werden, wenn der Laderaum vollständig befüllt worden ist. Um weiteren Platz zu schaffen, kann dann die Frontwand weiter nach vorne zum Schlepper hin verschwenkt werden, um zusätzliches Volumen zu schaffen. Vorteilhafterweise können die genannten Ladestellungseinstellmittel in Abhängigkeit eines Sensorsignals arbeiten, welches die vollständige Befüllung des Laderaums angibt.

In Weiterbildung der Erfindung kann die Steuereinrichtung auch einen Entlade-Steuermodus umfassen, in dem das Entladen des Laderaums und die hierbei erfolgende Betätigung einer Heckklappe und des Kratzbodens gesteuert werden. Vorteilhafterweise kann die Steuereinrichtung dabei dazu ausgebildet sein, auch im Entlademodus die Frontwand koordiniert zur Betätigung des Kratzbodens zu verstellen. Insbesondere kann die Frontwand nach hinten verstellt werden, wenn der Kratzboden beim Entladen das Erntegut nach hinten zur geöffneten Heckklappe befördert.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines an einen Schlepper angebauten Lade- und/oder Häckselwagens nach einer vorteilhaften Ausführung der Erfindung,
- Fig. 2:: eine ausschnittsweise, perspektivische Darstellung der Frontwand des Laderaums des Ladewagens aus Fig. 1, die die mehreren schwenkbaren Frontwandteile und die Verstellantriebe zum Verschwenken der Frontwandteile zeigt,
- Fig. 3:: eine Seitenansicht der Frontwand aus Fig. 2 in einer Blickrichtung parallel zu den Schwenkachsen der verschiedenen Frontwandteile, wobei die Hydraulikzylinder der Antriebseinrichtung zum Verschwenken der Frontwandteile gezeigt sind,
- Fig. 4:: eine ausschnittsweise Seitenansicht des Ladewagens aus den vorhergehenden Figuren, die die Frontwand in einer Ausgangs-Ladestellung zeigt, in der ein unterer Frontwandabschnitt näherungsweise senkrecht steht, und
- Fig. 5:: eine ausschnittsweise Seitenansicht des Ladewagens ähnlich Fig. 4, wobei die Frontwand in einer weiter nach vorne zum Schlepper gezeigten, weiteren Ladestellung gezeigt ist, in der das Laderaumvolumen vergrößert ist.

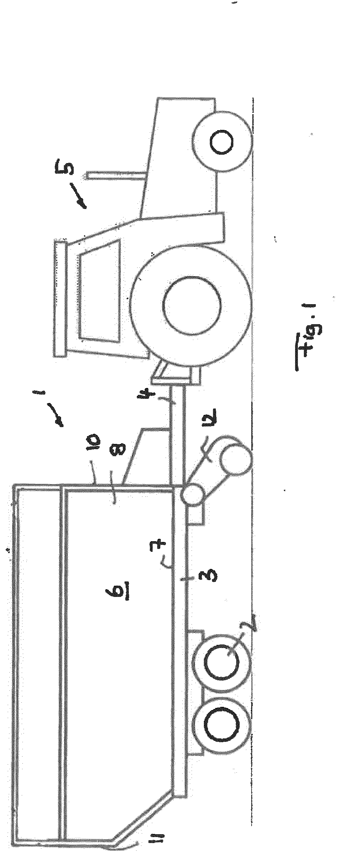

Wie Figur 1 zeigt, kann der dargestellte Lade- und Häckselwagen 1 in an sich bekannter Weise als Anbaugerät ausgebildet sein und ein Fahrwerk 2 umfassen, das einen Maschinenrahmen 3 trägt, der über eine Anbauvorrichtung 4 beispielsweise in Form einer Deichsel an einen Schlepper 5 anbaubar ist. Auf dem Maschinenrahmen 3 ist ein Laderaum 8 angeordnet, der in Fahrtrichtung betrachtet rechts und links von zwei aufrechten Seitenwänden 6 sowie vorne und hinten von einer Frontwand 10 und einer Heckklappe 11 begrenzt ist. Die Oberseite des Laderaums 8 kann im Wesentlichen offen ausgebildet und somit frei von Seilen, Spanngurten oder dergleichen beschaffen sein. Alternativ können aber für einen reinen Ladewagenbetrieb, gegebenenfalls auch für den Häckselbetrieb, Seile und/oder Bügel und/oder ähnliches den Laderaum an seiner Oberseite begrenzen.

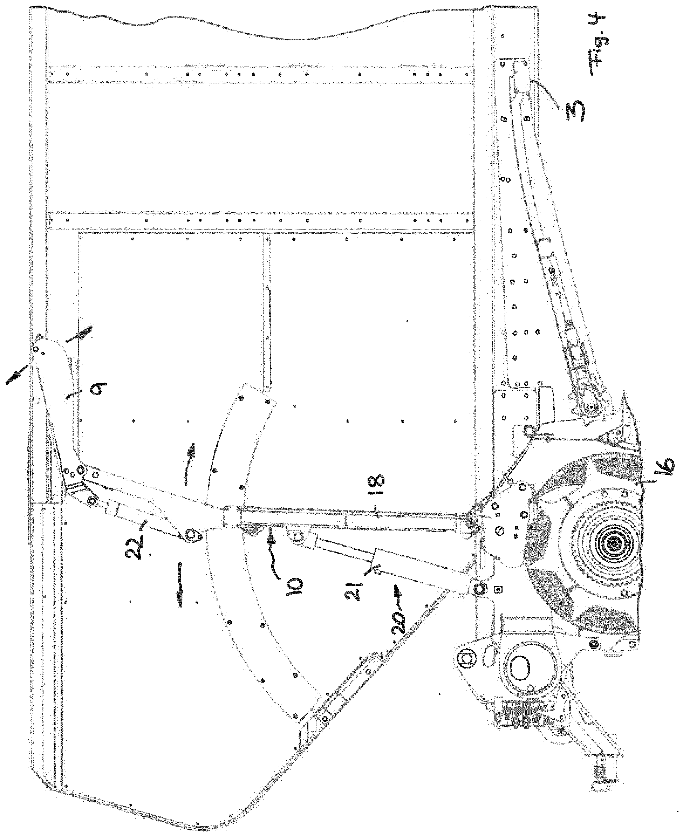

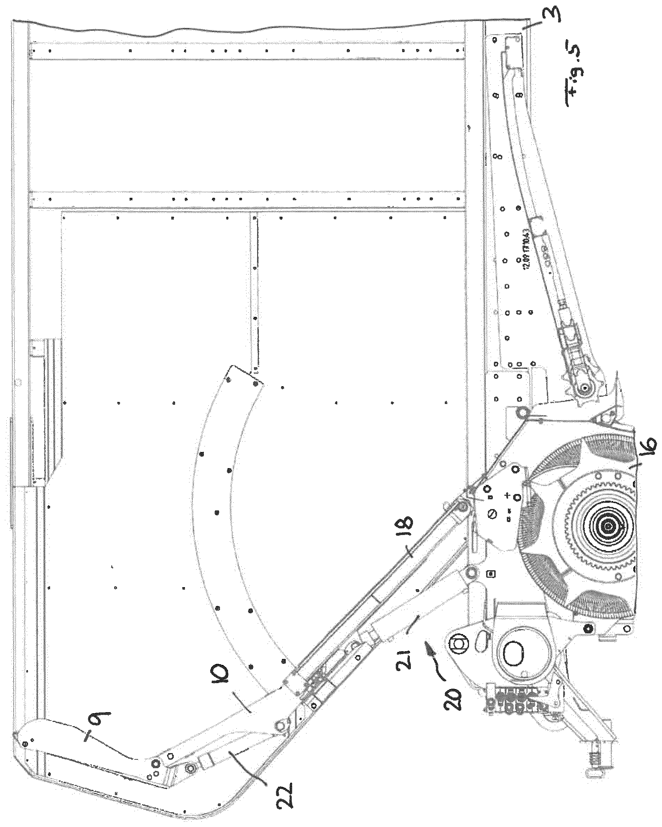

In an sich bekannter Weise kann im Bereich eines vorderen Endes des Laderaums 8 eine Aufnahmevorrichtung 12 vorgesehen sein, die eine anhebbare und absenkbare Pickup umfassen kann, mittels derer am Boden liegendes Erntegut wie Heu und Gras oder Stroh vom Boden aufgenommen und am vorderen Ende des Laderaums 8 von unten her in diesen hineingefördert werden kann. Wie die Figuren 4 und 5 zeigen, kann dabei ein Förderrotor 16 zwischen der genannten Pickup und dem Laderaum 8 vorgesehen sein, um das vom Boden aufgenommene Erntegut in den Laderaum 8 zu fördern, gegebenenfalls durch ein Schneidwerk hindurch.

Die Heckklappe 11 kann ebenfalls in an sich bekannter Weise aufschwenkbar gelagert sein, um den Laderaum 6 entladen zu können. Gegebenenfalls können an der heckseitigen Entladeöffnung Dosierwalzen vorgesehen sein.

Am Boden des Laderaums 8 ist ein Kratzboden 7 vorgesehen, der von einer geeigneten Antriebsvorrichtung angetrieben werden kann, um im Laderaum 8 befindliches Erntegut zur heckseitigen Entladeöffnung zu befördern. Der Kratzboden 7 kann beispielsweise Querleisten umfassen, die auf einem endlos umlaufenden Zugmittel wie Riemen oder Ketten befestigt sein können und entlang der Bodenfläche verfahren.

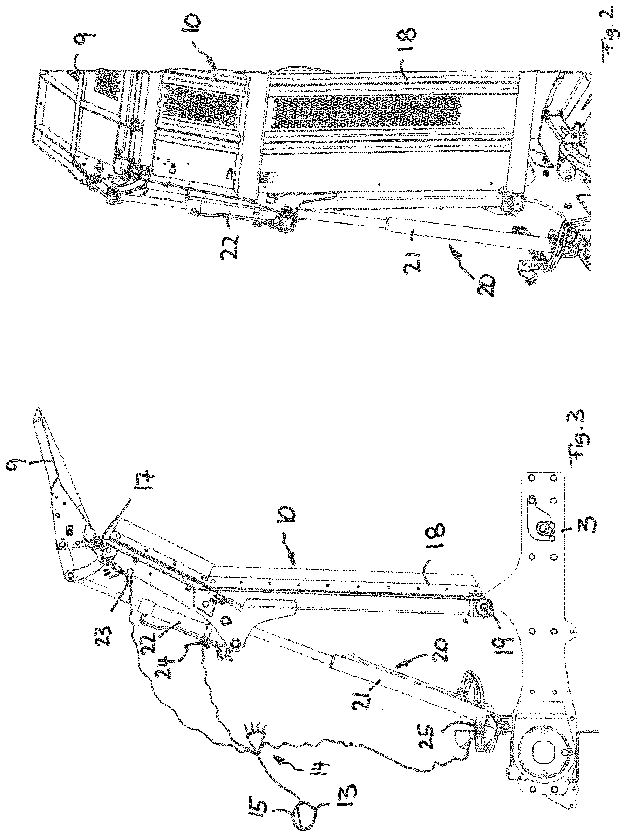

Wie die Figuren 2 bis 5 verdeutlichen, kann die genannte Frontwand 10 verstellt werden, wobei die Frontwand 10 wahlweise näher zum Heck des Ladewagens 1 hinbewegt oder mehr zum Schlepper 5 hinbewegt wird. Die Verstellbarkeit der Frontwand 10 könnte eine translatorische Verschiebbarkeit umfassen. Vorteilhafterweise kann die Frontwand 10 verschwenkbar ausgebildet sein, wie dies die Figuren zeigen.

Insbesondere kann die Frontwand 10 zumindest zwei zueinander klappbare bzw. verschwenkbare Frontwandteile aufweisen, wobei gegebenenfalls aber auch drei oder mehr verschwenkbare Frontwandabschnitte aneinander angelenkt sein können. Insbesondere kann die Frontwand 10 an einem oberen Frontwandabschnitt eine Verdichtungsklappe 9 aufweisen, die beispielsweise 10% bis 30% der Höhe der Frontwand 10 ausmachen kann. Die Verdichtungsklappe 9 kann um eine liegende, sich quer zur Fahrtrichtung erstreckende Schwenkachse 17 an einem oberen Randabschnitt eines unteren oder gegebenenfalls auch mittleren Frontwandteils 18 angelenkt sein, um relativ zu dem unteren Frontwandteil 18 auf- und abgenickt werden zu können. Alternativ oder zusätzlich könnte die Verdichtungsklappe 9 auch linear verschieblich höhenverstellbar an dem oberen Frontwandabschnitt angelenkt sein, um zum Verdichten nach unten geschlossen und umgekehrt zum Entlasten nach oben geöffnet werden zu können. Der untere Frontwandteil 18 kann wiederum um eine liegende, sich quer zur Fahrtrichtung erstreckende Schwenkachse 19 am Maschinenrahmen 3 oder einem untersten Frontwandabschnitt schwenkbar angelenkt sein, um nach vorne und nach hinten verschwenkt werden zu können.

Eine Verstellvorrichtung 20 zum Verstellen der Frontwand 10 umfasst einen Fremdenergie betätigten Antrieb, der einerseits die Frontwand 10 als Ganzes vor- und zurückschwenken und andererseits die genannte Verdichtungsklappe 9 auf- und niederwippen kann. Die genannte Verstelleinrichtung 20 kann beispielsweise zumindest zwei Druckmittelzylinder 21 und 22 umfassen, von denen einer die Verdichtungsklappe 9 relativ zum unteren Frontwandteil 18 verschwenken kann und der andere den unteren Frontwandteil 18 und damit zusammen auch den oberen Abschnitt bzw. die Verdichtungsklappe 9 gegenüber dem Maschinenrahmen nach vorne und nach hinten schwenken kann.

Der Kratzbodenantrieb des Kratzbodens 7 und die Verstellvorrichtung 20 zum Verstellen der Frontwand 10 können von einer Steuervorrichtung 13 angesteuert werden, die elektronisch ausgebildet und beispielsweise einen Mikroprozessor, einen Programmspeicher und ein Eingabe-/Ausgabe-Interface aufweisen kann.

Der genannten Steuervorrichtung 13 können über eine manuelle Eingabevorrichtung beispielsweise in Form eines Touchscreens Steuerbefehle zugeführt werden, beispielsweise um den Kratzbodenantrieb 7 in Gang zu setzen, woraufhin die Steuervorrichtung 13 in der eingangs erläuterten Weise daran angepasst auch die Frontwand 10 zuerst nach hinten und dann wieder zurück nach vorne in eine Ladestellung verschwenken kann.

Alternativ oder zusätzlich kann die Steuervorrichtung 13 aber auch von einer Erfassungseinrichtung 14 mit einem oder mehreren Sensorsignalen versorgt werden, um relevante Betriebs- und/oder Erntegutparameter, die erfasst wurden, der Steuervorrichtung 13 zuzuführen.

Die genannte Erfassungseinrichtung 14 kann insbesondere Bewegungs- und/oder Belastungssensoren zum Erfassen von Bewegungen und/oder Belastungen der Verdichtungsklappe 9 und/oder des unteren Frontwandteils 18 und/oder allgemein der Frontwand 10 aufweisen. Beispielsweise kann ein Bewegungssensor 23 eine Stellbewegung der Verdichtungswelle 9 umfassen und/oder einen Drucksensor 24 den Druck im Druckmittelzylinder 22 und damit die Belastung der Verdichtungsklappe 9 erfassen.

Alternativ oder zusätzlich kann ein Drucksensor 25 den Druck im Druckmittelzylinder 21 und damit die Belastung des unteren Frontwandteils 18 erfassen.

Alternativ oder zusätzlich können aber auch andere Stellbewegungen wie beispielsweise Schwenkbewegungen des unteren Frontwandteils 18 und/oder andere Belastungen bzw. Belastungsreaktionen wie beispielsweise Lagerkräfte an der unteren Schwenkachse 19 oder der oberen Schwenkachse 17 erfasst werden, um die Belastung durch das Erntegut zu bestimmen.

Ferner kann die Erfassungseinrichtung 14 alternativ oder zusätzlich auch einen oder mehrere Füllstandssensoren aufweisen, um den Füllstand des Laderaums 8 und/oder das Höhenniveau des sich im Laderaum 8 aufbauenden Erntegutstocks erfassen zu können.

In Abhängigkeit der Sensorsignale der Erfassungseinrichtung 14 steuert die Steuervorrichtung 13 den Antrieb des Kratzbodens 7 und die Verstellvorrichtung 20 an, um den Kratzboden 7 und die Frontwand 10 einschließlich deren Verdichtungsklappe 9 in der eingangs erläuterten Weise miteinander koordiniert zu betätigen, wenn der Laderaum 8 beladen wird. Insbesondere kann die Steuervorrichtung 13 dazu ausgebildet sein, in einem Belade-Betriebsmodus beim Beladen des Laderaums mit Erntegut die Frontwand 10 bei Betätigung des Kratzbodens 7 automatisch ein Stück weit nach hinten zum Heck hin zu verstellen und anschließend wieder zurück nach vorne in eine Ladestellung zu verstellen.

Insbesondere kann die Steuervorrichtung 13 dazu ausgebildet sein, im Belademodus das Betätigen des Kratzbodens und das damit verbundene Verstellen der Frontwand nach hinten und zurück nach vorne automatisch in Abhängigkeit zumindest eines Sensorsignals der Erfassungseinrichtung 14 zu veranlassen, nämlich insbesondere dann, wenn ein Erntegutdruck und/oder eine Ernteguthöhe im Laderaum 8, insbesondere im Bereich an dessen Frontwand, und/oder ein Förderwiderstand beim Beladen des Laderaums mit Erntegut einen vorbestimmten Schwellenwert erreicht oder überschreitet. Insbesondere kann der genannten Bewegungszyklus von Kratzboden und Frontwand von der Steuervorrichtung 13 veranlasst werden, wenn durch das sich aufbauende Erntegut die Verdichtungsklappe 9 ein Stück weit nach oben gedrückt wird und/oder die dies verhindernden Haltekräfte, wie von der Erfassungseinrichtung 14 erfasst, ein vorbestimmtes Niveau erreichen oder überschreiten, und/oder alternativ sich an dem unteren Frontwandabschnitt 18 ein von der Erfassungseinrichtung 14 erfasstes Belastungsniveau einstellt, welches ein vorbestimmtes Niveau erreicht oder überschreitet.

Der Verstellwinkel für das Zurückschwenken der Frontwand 10, welches beim Beladen zum Heck hin ausgeführt wird, kann vorteilhafterweise durch eine Einstellvorrichtung 15 variabel eingestellt werden, wie eingangs erläutert.

Weiterhin kann die Steuervorrichtung 13 Ladestellungs-Einstellmittel aufweisen, um die Ladestellung der Ladefrontwand 10 variabel einstellen zu können. Wie ein Vergleich der Figuren 4 und 5 zeigt, kann die Frontwand 10 eine näherungsweise aufrechte Lade-Ausgangsstellung besitzen, aus der die Frontwand 10 in dem beschriebenen Belade-Betriebsmodus der Steuervorrichtung 13 zyklisch weiter nach hinten geschwenkt und wieder zurückgeschwenkt werden kann.

Andererseits kann die Frontwand 10 auch noch weiter nach vorne in Laderaum vergrößernde Ladestellungen verschwenkt werden, wie dies Figur 5 zeigt, um im vorderen Endabschnitt des Laderaums 8 zusätzliches Volumen zu schaffen.

Zur Steuerung der genannten Verdichtungsklappe 9 kann die Steuervorrichtung 13 einen Verdichtungsklappen-Betriebsmodus aufweisen, in dem die Verdichtungsklappe 9 koordiniert mit dem nach vorne und hinten Verstellen der Frontwand 10 und/oder dem Betätigen des Kratzbodens 7 mehr geöffnet bzw. stärker verschlossen wird. Steht beim Beladen des Laderaums ein nach hinten Verfrachten des sich aufbauenden Futterstocks an, beispielsweise durch nach hinten Verfahren der Frontwand 10 und/oder durch Betätigen des Kratzbodens 7, kann die Steuervorrichtung 13 zunächst die Verdichtungsklappe 9 ein Stück weit nach unten schwenken und/oder nach unten verstellen, um eine nochmalige Verdichtung des Futterstocks zu erzielen. Unabhängig hiervon kann die Steuervorrichtung 13 die Verdichtungsklappe 9 ein Stück weit nach oben öffnen, um das nach hinten Verfrachten des Futterstocks zu erleichtern. Eine solche Öffnungsbewegung der Verdichtungsklappe 9 kann vor und/oder bei einem nach hinten Verfahren der Frontwand und/oder vor und/oder bei einem Betätigen des Kratzbodens 7 vorgenommen werden.

Wird der Kratzboden 7 wieder abgestellt und/oder wird die Frontwand 10 wieder nach vorne verstellt, kann die Steuervorrichtung 13 die Verdichtungsklappe 9 wieder in eine weiter geschlossene Stellung nach unten verbringen.

Die Steuervorrichtung 13 kann die genannte Verdichtungsklappe 9 auch ganz unabhängig von der Betätigung des Kratzbodens und dem nach hinten/vorne Verstellen der Frontwand betätigen. Ein Öffnen und Schließen der genannten Verdichtungsklappe 9 kann von der Steuervorrichtung 13 insbesondere in Abhängigkeit eines Sensorsignals der Erfassungseinrichtung 14 veranlasst werden, nämlich insbesondere dann, wenn ein Erntegutdruck im Laderaum 8 und/oder im Befüllkanal zu groß wird. Beispielsweise kann die Steuervorrichtung 13 die Verdichtungsklappenbewegung in Abhängigkeit eines Signals einer Bestimmungseinrichtung steuern, die ein Drehmoment und/oder eine Antriebsleistung und/oder eine Antriebs- und/oder Reaktionskraft einer Antriebsvorrichtung zum Antreiben eines Förderrotors bestimmt, mittels dessen das Erntegut vom Boden aufgenommen und/oder in den Laderaum befördert wird. Beispielsweise kann mittels eines Kraftmessbolzens ein Belastungszustand eines Förderrotors im Messerbereich des Lade- und/oder Häckselwagens erfasst werden. Wird ein zunehmend größerer oder zu großer Belastungszustand des Förderrotors erfasst, kann die Verdichtungsklappe ein Stück weit geöffnet werden.

Alternativ oder zusätzlich kann die Verdichtungsklappenbewegung aber auch in Abhängigkeit eines Erntegutdrucks und/oder eines Füllstands im Laderaum gesteuert werden, wobei die Erfassungseinrichtung einen entsprechenden Sensor zur Bestimmung des genannten Erntegutdrucks und/oder Füllstands umfassen kann.

## Patentansprüche

1. Lade- und/oder Häckselwagen, mit einem Laderaum (8) zum Speichern von Erntegut, der einen Kratzboden (7) und eine verstellbare Frontwand (10) aufweist, sowie einer Steuervorrichtung (13) zum Betätigen des Kratzbodens (7) und der Frontwand (10), wobei die Steuervorrichtung (13) einen Belade-Betriebsmodus aufweist, in dem beim Beladen des Laderaums (8) mit Erntegut die Frontwand (10) bei Betätigung des Kratzbodens (7) in Abhängigkeit eines Sensorsignals einer Erfassungeinrichtung (14) automatisch ein Stück nach hinten zum Heck hin verstellt und anschließend wieder zurück nach vorne in eine Ladestellung verstellt wird, **dadurch gekennzeichnet, dass** die Erfassungseinrichtung (14) dazu ausgebildet ist, eine vom Erntegutdruck im Laderaum (8) nach vorne bewirkte Belastung der Frontwand (10) und/oder induzierte Haltekraft der Frontwand (10) zu erfassen, und wobei die Steuervorrichtung (13) dazu ausgebildet ist, das Betätigen des Kratzbodens (7) und das damit verbundene Verstellen der Frontwand (10) nach hinten und zurück nach vorne im Beladebetriebsmodus dann zu veranlassen, wenn das Sensorsignal der Erfassungseinrichtung (14) eine vorbestimmte Belastung der Frontwand (10) anzeigt.

2. Lade- und/oder Häckselwagen nach dem vorhergehenden Anspruch, wobei die Steuervorrichtung (13) dazu ausgebildet ist, die Verstellung der Frontwand (10) zurück nach vorne in die Ladestellung nach Stoppen des Kratzbodens (7) vorzusehen.

3. Lade- und/oder Häckselwagen nach einem der vorhergehenden Ansprüche, wobei die Verstellung der Frontwand (10) nach hinten zum Wagenheck hin und/oder zurück nach vorne in die Ladestellung zeitverzögert und/oder wegverzögert gegenüber dem Starten bzw. Stoppen des Kratzbodens (7) gesteuert ist.

4. Lade- und/oder Häckselwagen nach einem der vorhergehenden Ansprüche, wobei die Frontwand (10) eine Verdichtungsklappe (9) umfasst, die an einem oberen Frontwandabschnitt um eine liegende Schwenkachse (17) schwenkbar und/oder höhenverstellbar gelagert ist, wobei die Steuervorrichtung (13) einen Verdichtungsklappen-Betriebsmodus aufweist, in dem die genannte Verdichtungsklappe (9)
- bei und/oder vor einem nach hinten, zum Heck hin gerichteten Verstellen eines unteren und/oder oberen Frontwandabschnitts ein Stück weit nach oben geöffnet wird, und/oder
- bei und/oder vor einem Betätigen des Kratzbodens (7) ein Stück weit nach oben geöffnet wird.

5. Lade- und/oder Häckselwagen nach dem vorhergehenden Anspruch, wobei die genannte Verdichtungsklappe (9) vor, bei und/oder nach einem wieder nach vorne gerichteten Zurückverstellen des unteren und/oder oberen Frontwandabschnitts in dessen Ladestellung nach unten geschlossen wird, und/oder beim und/oder nach dem Abstellen des Kratzbodens (7) nach unten geschlossen wird.

6. Lade- und/oder Häckselwagen nach einem der vorhergehenden Ansprüche, wobei die Steuervorrichtung (13) dazu ausgebildet ist, im Verdichtungsklappen-Betriebsmodus das nach oben Öffnen und nach unten Schließen der Verdichtungsklappe (10) automatisch in Abhängigkeit eines Sensorsignals der Erfassungseinrichtung (14) auszuführen, das einen Erntegutdruck und/oder eine Ernteguthöhe im Laderaum (8) insbesondere einem Laderaumabschnitt an der Frontwand (10), und/oder einen Förderwiderstand beim Beladen des Laderaums (8) mit Erntegut charakterisiert.

7. Lade- und/oder Häckselwagen nach dem vorhergehenden Anspruch, wobei die Verdichtungsklappe (9) an einem oberen Frontwandabschnitt vorgesehen ist, die um eine liegende Schwenkachse (17) schwenkbar gelagert ist, wobei die Erfassungseinrichtung (14) dazu ausgebildet ist, ein Aufdrücken der Verdichtungsklappe (9) und/oder eine Haltekraft der Verdichterklappe (9) zu erfassen, und wobei die Steuervorrichtung (13) dazu ausgebildet ist, das Betätigen des Kratzbodens (7) und das damit verbundene Verstellen der Frontwand (10) nach hinten und zurück nach vorne dann zu veranlassen, wenn das Sensorsignal der Erfassungseinrichtung ein vorbestimmtes Aufdrücken und/oder eine vorbestimmte Haltekraft der Verdichtungsklappe (9) anzeigt.

8. Lade- und/oder Häckselwagen nach einem der vorhergehenden Ansprüche, wobei die Erfassungseinrichtung (14) dazu ausgebildet ist, eine Leistungsaufnahme und/oder eine Lagerreaktionskraft eines Förderrotors zum Beladen des Laderaums (8) mit Erntegut zu erfassen, und wobei die Steuervorrichtung (13) dazu ausgebildet ist, das Betätigen des Kratzbodens (7) und das damit verbundene Verstellen der Frontwand (10) nach hinten und zurück nach vorne dann zu veranlassen, wenn das Sensorsignal der Erfassungseinrichtung (14) eine vorbestimmte Leistungsaufnahme und/oder Lagerreaktionskraft des Förderrotors anzeigt.

9. Lade- und/oder Häckselwagen nach einem der vorhergehenden Ansprüche, wobei die Steuervorrichtung (13) eine Einstellvorrichtung (15) zum Einstellen des Verstellwegs und/oder -winkels, um den die Frontwand (10) im Beladebetriebsmodus nach hinten verstellt wird, aufweist.

10. Lade- und/oder Häckselwagen nach dem vorhergehenden Anspruch, wobei die Einstellvorrichtung (15) Auswahlmittel zum Auswählen zumindest eines Erntegutparameters wie Ernteguttyp, Schnittlänge und/oder Erntegutfeuchte aufweist und dazu ausgebildet ist, den Verstellweg und/oder -winkel in Abhängigkeit des ausgewählten Erntegutparameters einzustellen.

11. Lade- und/oder Häckselwagen nach einem der vorhergehenden Ansprüche, wobei die Ladestellung der Frontwand (10) variabel einstellbar ist.

12. Lade- und/oder Häckselwagen nach dem vorhergehenden Anspruch, wobei die Steuervorrichtung (13) dazu ausgebildet ist, die Ladestellung der Frontwand (10) im Beladebetriebsmodus mit fortschreitender Beladung des Laderaums (8) zunehmend weiter nach vorne zu verstellen.

13. Lade- und/oder Häckselwagen nach dem vorhergehenden Anspruch, wobei die Steuervorrichtung (13) dazu ausgebildet ist, eine weiter vorne liegende Ladestellung der Frontwand (10) dann einzustellen, wenn ein Beladesignal ein zumindest näherungsweise vollständiges Beladen des Laderaums (8) anzeigt.

14. Lade- und/oder Häckselwagen nach einem der beiden vorhergehenden Ansprüche, wobei die Steuervorrichtung (13) dazu ausgebildet ist, die Ladestellung der Frontwand (10) mit jedem oder jedem zweiten oder jedem x-ten Verstellzyklus des Kratzbodens und der Frontwand (10) ein Stück weiter nach vorne zu verstellen.

## Claims

1. Loading and/or shredding wagon, having a loading space (8) for storing crops, which has a scraper floor (7) and an adjustable front wall (10), and a control device (13) for actuating the scraper floor (7) and the front wall (10), wherein the control device (13) has a loading operating mode, in which when the loading space (8) is loaded with crops, the front wall (10) is automatically moved a short distance to the rear when the scraper floor (7) is actuated as a function of a sensor signal from a detection device (14) and is then moved back to the front into a loading position, **characterised in that** the detection device (14) is designed to detect a forward load on the front wall (10) caused by the crop pressure in the loading space (8) and/or induced holding force of the front wall (10), and wherein the control device (13) is designed to cause the actuation of the scraper floor (7) and the associated displacement of the front wall (10) to the rear and back to the front in the loading operating mode when the sensor signal of the detection device (14) indicates a predetermined load on the front wall (10).

2. Loading and/or shredding wagon according to the preceding claim, wherein the control device (13) is designed to provide the forward displacement of the front wall (10) back to the loading position after stopping the scraper floor (7).

3. Loading and/or shredding wagon according to any one of the preceding claims, wherein the displacement of the front wall (10) towards the rear of the vehicle and/or back towards the front into the loading position is controlled with a time delay and/or with a delay in relation to the starting or stopping of the scraper floor (7).

4. Loading and/or shredding wagon according to any one of the preceding claims, wherein the front wall (10) comprises a compaction flap (9), which is mounted on an upper front wall section so as to be pivotable and/or height-adjustable about a horizontal pivot axis (17), wherein the control device (13) has a compaction flap operating mode, in which said compaction flap (9)
- is opened a distance upward during and/or before a rearward displacement back of a lower and/or upper front wall section, and/or
- is opened a distance upward during and/or before actuation of the scraper floor (7).

5. Loading and/or shredding wagon according to any one of the preceding claims, wherein said compaction flap (9) is closed downward before, during and/or after a forward displacement of the lower and/or upper front wall section back into its loading position, and/or is closed downward during and/or after stopping the scraper floor (7).

6. Loading and/or shredding wagon according to any one of the preceding claims, wherein the control device (13) is designed to automatically open the compaction flap (10) upwards and close it downwards in the compaction flap operating mode as a function of a sensor signal from the detection device (14), which signal characterises a crop pressure and/or a crop height in the loading space (8), in particular a loading space section on the front wall (10), and/or a conveying resistance when loading the loading space (8) with crops.

7. Loading and/or shredding wagon according to any one of the preceding claims, wherein the compaction flap (9) is provided on an upper front wall section which is mounted pivotably about a horizontal pivot axis (17), wherein the detection device (14) is designed to detect a pressing open of the compaction flap (9) and/or a holding force of the compaction flap (9), and wherein the control device (13) is designed to cause the actuation of the scraper floor (7) and the associated displacement of the front wall (10) to the rear and back to the front when the sensor signal of the detection device indicates a predetermined pressing open and/or a predetermined holding force of the compaction flap (9).

8. Loading and/or shredding wagon according to any one of the preceding claims, wherein the detection device (14) is designed to detect a power consumption and/or a bearing reaction force of a conveyor rotor for loading the loading space (8) with crops, and wherein the control device (13) is designed to cause the actuation of the scraper floor (7) and the associated displacement of the front wall (10) to the rear and back to the front when the sensor signal of the detection device (14) indicates a predetermined power consumption and/or bearing reaction force of the conveyor rotor.

9. Loading and/or shredding wagon according to any one of the preceding claims, wherein the control device (13) has an adjustment device (15) for adjusting the displacement path and/or angle by which the front wall (10) is displaced rearward in the loading operating mode.

10. Loading and/or shredding wagon according to the preceding claim, wherein the adjustment device (15) has selection means for selecting at least one crop parameter such as crop type, cut length and/or crop moisture, and is designed to adjust the displacement path and/or angle as a function of the selected crop parameter.

11. Loading and/or shredding wagon according to any one of the preceding claims, wherein the loading position of the front wall (10) is variably adjustable.

12. Loading and/or shredding wagon according to the preceding claim, wherein the control device (13) is designed to displace the loading position of the front wall (10) in the loading operation mode increasingly further forwards as the loading of the loading space (8) progresses.

13. Loading and/or shredding wagon according to the preceding claim, wherein the control device (13) is designed to adjust a further forward loading position of the front wall (10) when a loading signal indicates an at least approximately complete loading of the loading space (8).

14. Loading and/or shredding wagon according to one of the two preceding claims, wherein the control device (13) is designed to displace the loading position of the front wall (10) a little further forward with every or every second or every xth displacement cycle of the scraper floor and the front wall (10).

## Revendications

1. Chariot de chargement et/ou de hachage, avec un espace de chargement (8) pour stocker des produits récolté, qui présente un fond mouvant (7) et une paroi frontale (10) déplaçable, ainsi qu'un dispositif de commande (13) pour actionner le fond mouvant (7) et la paroi frontale (10), le dispositif de commande (13) présentant un mode de fonctionnement de chargement, dans lequel, lors du chargement de l'espace de chargement (8) avec du produit récolté, la paroi frontale (10) est déplacée automatiquement un peu vers l'arrière en direction de l'arrière lors de l'actionnement du fond mouvant (7) en fonction d'un signal de capteur d'un dispositif de détection (14) et est ensuite à nouveau déplacée en retour vers l'avant dans une position de chargement, **caractérisé en ce que** le dispositif de détection (14) est configuré pour détecter une sollicitation de la paroi frontale (10) provoquée vers l'avant par la pression du produit récolté dans le compartiment de chargement (8) et/ou une force de retenue induite de la paroi frontale (10), et le dispositif de commande (13) étant configuré pour provoquer l'actionnement du fond mouvant (7) et le déplacement lié à celui-ci de la paroi frontale (10) vers l'arrière et en retour vers l'avant dans le mode de fonctionnement de chargement lorsque le signal de capteur du dispositif de détection (1 4) indique une sollicitation prédéterminée de la paroi frontale (10).

2. Chariot de chargement et/ou de hachage selon la revendication précédente, dans lequel le dispositif de commande (13) est configuré pour prévoir le déplacement de la paroi frontale (10) en retour vers l'avant dans la position de chargement après l'arrêt du fond mouvant (7).

3. Chariot de chargement et/ou de hachage selon l'une quelconque des revendications précédentes, dans lequel le déplacement de la paroi frontale (10) vers l'arrière en direction de l'arrière du chariot et/ou en retour vers l'avant dans la position de chargement est commandé avec un retard dans le temps et/ou avec un retard dans la distance par rapport au démarrage ou à l'arrêt du fond mouvant (7).

4. Chariot de chargement et/ou de hachage selon l'une quelconque des revendications précédentes, dans lequel la paroi frontale (10) comprend un volet de compactage (9) qui est monté sur une section supérieure de la paroi frontale de manière pivotante autour d'un axe de pivotement horizontal (17) et/ou de manière déplaçable en hauteur, le dispositif de commande (13) présentant un mode de fonctionnement de volet de compactage, dans lequel ledit volet de compactage (9)
- est un peu ouvert vers le haut pendant et/ou avant un déplacement vers l'arrière, orienté vers l'arrière, d'une section de paroi frontale inférieure et/ou supérieure, et/ou
- est un peu ouvert vers le haut pendant et/ou avant un actionnement du fond mouvant (7).

5. Chariot de chargement et/ou de hachage selon la revendication précédente, dans lequel ledit volet de compactage (9) est fermé vers le bas avant, pendant et/ou après un déplacement en retour orienté vers l'avant de la section de paroi frontale inférieure et/ou supérieure dans sa position de chargement, et/ou est fermé vers le bas pendant et/ou après l'arrêt du fond mouvant (7).

6. Chariot de chargement et/ou de hachage selon l'une quelconque des revendications précédentes, dans lequel le dispositif de commande (13) est configuré pour exécuter automatiquement, dans le mode de fonctionnement de volet de compactage, l'ouverture vers le haut et la fermeture vers le bas du volet de compactage (10) en fonction d'un signal de capteur du dispositif de détection (14), qui caractérise une pression de produit récolté et/ou une hauteur de produit récolté dans l'espace de chargement (8), notamment une section de l'espace de chargement sur la paroi frontale (10), et/ou une résistance à l'acheminement lors du chargement de l'espace de chargement (8) avec le produit récolté.

7. Chariot de chargement et/ou de hachage selon la revendication précédente, dans laquelle le volet de compactage (9) est prévu sur une section supérieure de la paroi frontale, qui est montée de manière à pivotante autour d'un axe de pivotement horizontal (17), le dispositif de détection (14) étant configuré pour détecter une pression sur le volet de compactage (9) et/ou une force de retenue du volet de compactage (9), et le dispositif de commande (13) étant configuré pour provoquer l'actionnement du fond mouvant (7) et le déplacement lié à celui-ci de la paroi frontale (10) vers l'arrière et en retour vers l'avant lorsque le signal de capteur du dispositif de détection indique une pression prédéterminée et/ou une force de retenue prédéterminée du volet de compactage (9).

8. Chariot de chargement et/ou de hachage selon l'une quelconque des revendications précédentes, dans lequel le dispositif de détection (14) est configuré pour détecter une absorption de puissance et/ou une force de réaction de palier d'un rotor d'acheminement pour charger l'espace de chargement (8) avec le produit récolté, et dans lequel le dispositif de commande (13) est configuré pour provoquer l'actionnement du fond mouvant (7) et le déplacement lié à celui-ci de la paroi frontale (10) vers l'arrière et en retour vers l'avant lorsque le signal du capteur du dispositif de détection (14) indique une absorption de puissance et/ou une force de réaction de palier du rotor d'acheminement prédéterminées.

9. Chariot de chargement et/ou de hachage selon l'une quelconque des revendications précédentes, dans lequel le dispositif de commande (13) présente un dispositif de réglage (15) pour régler la course et/ou l'angle de déplacement dont la paroi frontale (10) est déplacée vers l'arrière dans le mode de fonctionnement de chargement.

10. Chariot de chargement et/ou de hachage selon la revendication précédente, dans lequel le dispositif de réglage (15) présente des moyens de sélection pour sélectionner au moins un paramètre de produit récolté tel que le type de produit récolté, la longueur de coupe et/ou l'humidité du produit récolté et est configuré pour régler la course et/ou l'angle de déplacement en fonction du paramètre de produit récolté sélectionné.

11. Chariot de chargement et/ou de hachage selon l'une quelconque des revendications précédentes, la position de chargement de la paroi frontale (10) étant réglable de manière variable.

12. Chariot de chargement et/ou de hachage selon la revendication précédente, dans lequel le dispositif de commande (13) est configuré pour régler la position de chargement de la paroi frontale (10) dans le mode de chargement de plus en plus vers l'avant au fur et à mesure du chargement de l'espace de chargement (8).

13. Chariot de chargement et/ou de hachage selon la revendication précédente, dans lequel le dispositif de commande (13) est configuré pour régler une position de chargement plus vers l'avant de la paroi frontale (10) lorsqu'un signal de chargement indique un chargement au moins approximativement complet de l'espace de chargement (8).

14. Chariot de chargement et/ou de hachage selon l'une quelconque des deux revendications précédentes, dans lequel le dispositif de commande (13) est configuré pour déplacer la position de chargement de la paroi frontale (10) un peu plus vers l'avant à chaque ou chaque deuxième ou chaque x^{ième} cycle de déplacement du fond mouvant et de la paroi frontale (10).
